# EUROPÄISCHE PATENTSCHRIFT

(11) **EP 3 803 311 B1**
(45) Veröffentlichungstag und Bekanntmachung des Hinweises auf die Patenterteilung: **11.05.2022**
(21) Anmeldenummer: 19730126.0
(22) Anmeldetag: 04.06.2019
(51) Int. Cl.: G01M 3/20, F16L 37/098, F16L 39/00, F16L 37/133, G01D 11/30

(54) **VERBINDUNGSVORRICHTUNG ZUM VERBINDEN EINES GASSENSORS**
CONNECTING DEVICE FOR CONNECTING A GAS SENSOR
DISPOSITIF DE CONNEXION POUR CONNECTER UN ABONNÉ DE BUS DE DONNÉES

(30) Priorität: 05.06.2018 DE 102018208826
(43) Veröffentlichungstag der Anmeldung: 14.04.2021
(73) Patentinhaber: Inficon GmbH, 50968 Köln (DE)
(72) Erfinder: WEIß, Sebastian, 50968 Köln (DE)
(74) Vertreter: dompatent von Kreisler Selting Werner - Partnerschaft von Patent- und Rechtsanwälten mbB
(86) Internationale Anmeldenummer: PCT/EP2019/064537
(87) Internationale Veröffentlichungsnummer: WO 2019/234051

(56) Entgegenhaltungen:
- DE-A1-102008 050 901
- DE-U1-202016 103 360
- US-A1- 2004 051 043
- US-A1- 2006 102 844
- US-A1- 2008 277 586

## Beschreibung

Die Erfindung betrifft eine Verbindungsvorrichtung zum Verbinden eines Gassensors mit einem Gasleckdetektor.

Gassensoren dienen zur Analyse von dem Sensor zugeführtem Gas und arbeiten beispielsweise nach dem Prinzip der Infrarotabsorptionspektrometrie. Typischerweise sind Gassensoren mit einer langgestreckten Küvette versehen, in der das zu analysierende Gas von IR-Strahlung durchstrahlt wird. Um die Messkomponenten des Gassensors zu schützen, ist dieses mit einem langgestreckten Sensorgehäuse versehen, das zwei stirnseitige Enden aufweist. Gassensoren sind erforderliche Komponenten eines Gasleckdetektors zum Detektieren eines Gaslecks.

US 2008/277586 A1 beschreibt einen Infrarotgassensor und einen handgehaltenen Gasleckdetektor.

US 2004/051043 A1 beschreibt einen Infrarotgasanalysator zur Gasdetektion.

Der Erfindung liegt die Aufgabe zugrunde, einen Gassensor bereitzustellen, der sicher, fest und lösbar mit einem Gasleckdetektor verbindbar ist.

Die erfindungsgemäße Verbindungsvorrichtung ist definiert durch die Merkmale von Patentanspruch 1.

Demnach ist zum einen eine Führungsschiene vorgesehen, die an dem einen des Gassensors und des Gasleckdetektors angeordnet ist, also entweder an dem Gassensor oder an dem Gasleckdetektor. Die Führungsschiene greift mit dem anderen des Gassensors und des Gasleckdetektors zusammen, so dass der Gassensor entlang der Führungsschiene in Längsrichtung des Sensorgehäuses verschiebbar ist. In der distalen Endposition des Gassensors greift beim Verschieben entlang der Führungsschiene mindestens ein erster Gasanschluss des Gasleckdetektors mit einem entsprechenden, komplementären zweiten Gasanschluss des Gassensors gasleitend zusammen. In dieser Position wird das Sensorgehäuse an dem Gasleckdetektor mithilfe einer Befestigungskralle gehalten, die fest an dem einen des Gassensors und des Gasleckdetektors befestigt ist und zwei elastisch federnde Federschenkel aufweist. Jeder Federschenkel weist eine Rastnase auf, die mit einem stirnseitigen Ende der Führungsschiene zusammengreift.

Ein Spreizelement ist mit zwei Haltearmen dazu ausgebildet, zwischen die Befestigungskralle und das stirnseitige Ende des Sensorgehäuses geschoben zu werden. Dabei greift jeder der beiden Haltearme zwischen einen Federschenkel und das Sensorgehäuse und spreizt den Federschenkel derart, dass die Rastnase außer Eingriff mit dem Sensorgehäuse gelangt. Jeder Haltearm ist mit einer Zugflanke versehen, die das stirnseitige Ende des Sensorgehäuses hintergreift und beim Ziehen des Spreizelements in proximaler Richtung das Sensorgehäuse hält und ebenfalls in proximaler Richtung verschiebt. Jeder Haltearm ist mit einer Einführschräge versehen, die beim Verschieben in distaler Richtung des Spreizelements die Rastnase kontaktiert und nach außen drückt, so dass der Federschenkel gebogen wird.

Eine Ausführschräge kann dazu vorgesehen sein, in distaler Endposition des Spreizelements, wenn dieses das stirnseitige Ende des Sensorgehäuses umgreift, mit der Rastnase der Befestigungskralle derart zusammenzugreifen, dass zum Ziehen des Sensorgehäuses in proximaler Richtung ein Zugwiderstand zu überwinden ist. Dieser Zugwiderstand resultiert aus der Federkraft der Federschenkel und der Schräge der Ausführschräge in Bezug auf die Längsrichtung des langgestreckten Sensorgehäuses.

Jede Einführschräge und jede Ausführschräge kann an einer Außenseite des Haltearms angeordnet sein, während die Zugflanke an der gegenüberliegenden Innenseite des Haltearms angeordnet ist.

Vorzugsweise ist das Spreizelement dazu ausgebildet, an den dem zweiten Gasanschluss gegenüberliegenden stirnseitigen Ende des Sensorgehäuses befestigt zu werden. Hierzu kann ein von den Haltearmen abstehender flexibler säulenartiger Bereich ausgebildet sein, an dessen gegenüberliegendem Ende ein T-Stück mit Befestigungselementen, beispielsweise in Form von Schraubenlöchern, für das Sensorgehäuse ausgebildet ist.

Das Spreizelement ist vorzugsweise mit einem Zuggriff versehen, der dazu ausgebildet ist, von einem Benutzer gegriffen und gehalten zu werden, um das Spreizelement in proximaler Richtung über den Zugwiderstand des Eingriffs zwischen Ausführschräge und Rastnase hinweg zu bewegen und das Sensorgehäuse von dem Gasleckdetektor zu entfernen.

Die Befestigungskralle hält das Sensorgehäuse im eingeschobenen Zustand in dessen distaler Endposition, in der die ersten und zweiten Gasanschlüsse gasleitend zusammengreifen. Um die Verbindung mit der Rastnase zu lösen, wird das Spreizelement auf das proximale stirnseitige Ende des Sensorgehäuses aufgeschoben und biegt dabei die beiden Federschenkel auseinander, wodurch die Rastnase außer Eingriff mit dem stirnseitigen Ende des Sensorgehäuses gelangt. Stattdessen gelangen die Zugflanken an den Haltearmen des Spreizelements in Eingriff mit dem stirnseitigen Ende des Sensorgehäuses, während die Rastnasen über die Ausführ- und Einführschrägen der Haltearme hinweggleiten. Die Befestigungskralle umgreift also das Spreizelement, welches wiederum das stirnseitige Ende des Sensorgehäuses umgreift.

Vorzugsweise trägt die Führungsschiene den ersten Gasanschluss.

Im Folgenden wird anhand der Figuren ein Ausführungsbeispiel der Erfindung näher erläutert:
- Fig. 1: das Sensorgehäuse und den Gasleckdetektor,

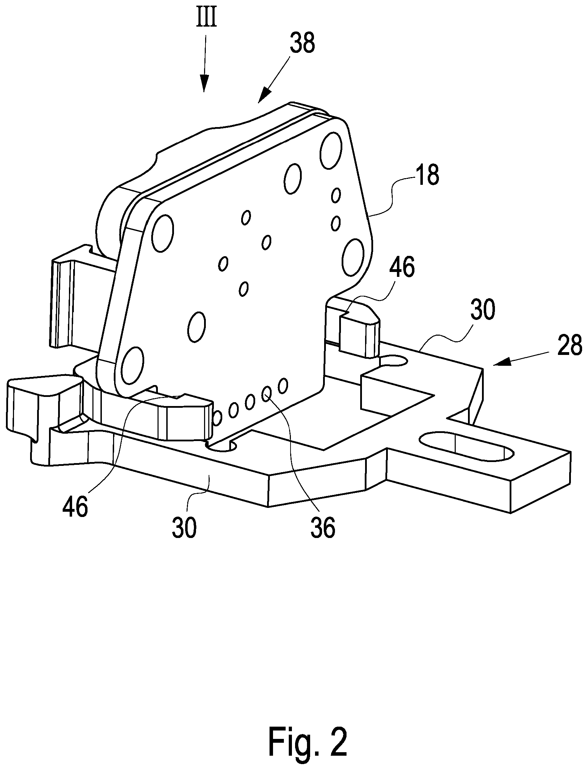

- Fig. 2: ein Detail gemäß II in Figur 1,

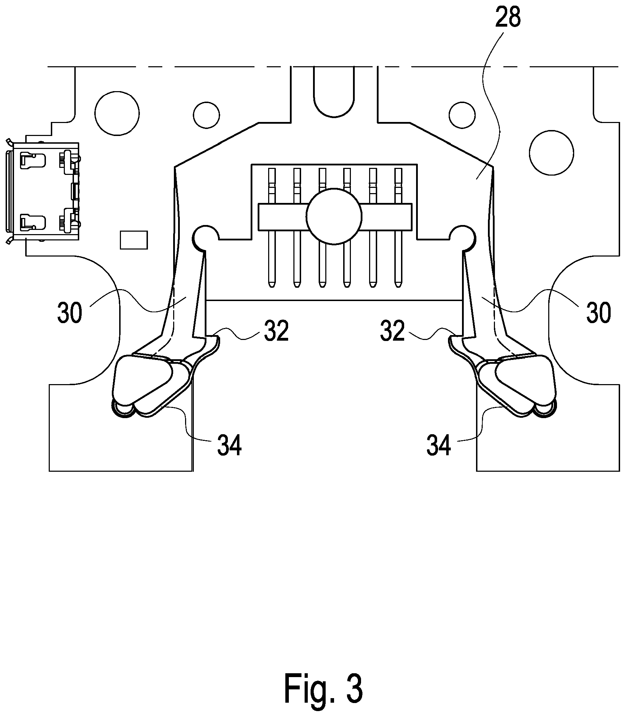

- Fig. 3: ein Detail gemäß III in Figur 2,

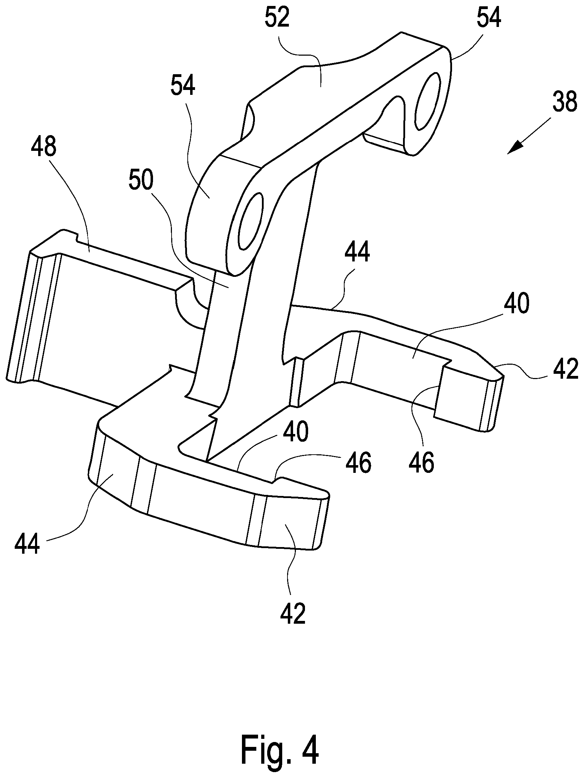

- Fig. 4: eine perspektivische Ansicht des Spreizelements und

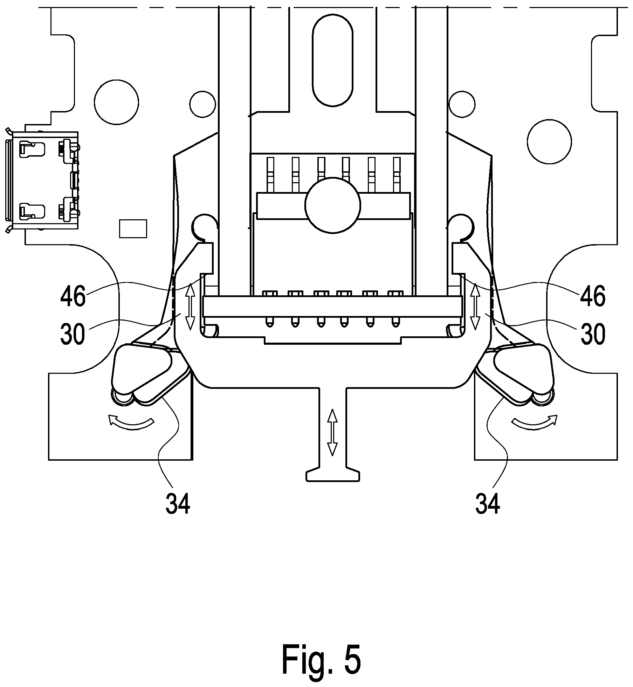

- Fig. 5: ein Detail gemäß V in Figur 1.

Der Gassensor 12 weist ein langgestrecktes Sensorgehäuse 14 auf. Das Sensorgehäuse 14 hat ein erstes stirnseitiges Ende 16 und ein dem ersten stirnseitigen Ende 16 gegenüberliegendes zweites stirnseitiges Ende 18.

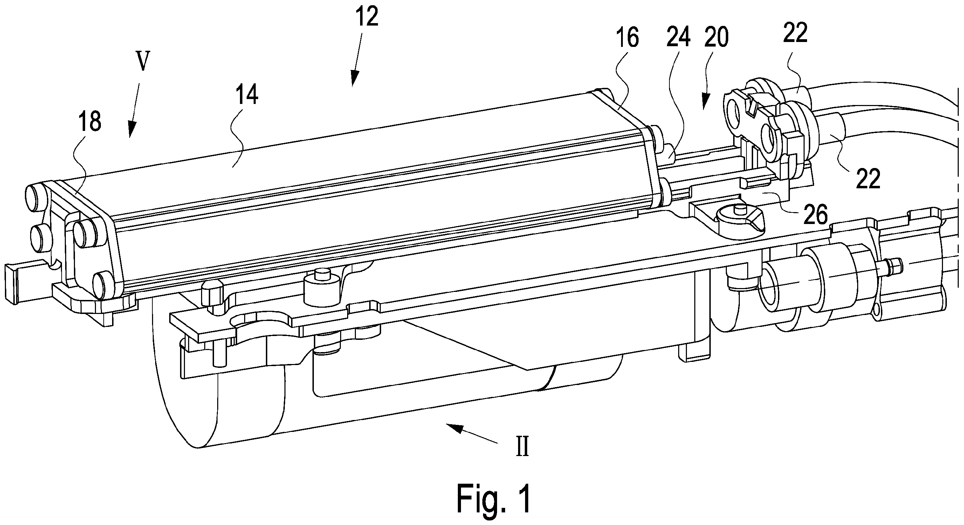

Der in Figur 1 lediglich angedeutete Gasleckdetektor 20 trägt zwei erste Gasanschlüsse 22, die jeweils über elastische Schläuche mit der Ansaugöffnung des Gasleckdetektors 20 verbunden sind. Die ersten Gasanschlüsse 22 sind dazu ausgebildet, mit hierzu komplementären zweiten Gasanschlüssen 24 an dem ersten stirnseitigen Ende 16 des Sensorgehäuse 14 zusammenzugreifen.

Die Gasanschlüsse 22 werden von einer Führungsschiene 26 getragen, die an dem Gasleckdetektor 20 befestigt ist. Die Führungsschiene 26 greift beispielsweise nach dem Prinzip von Nut und Feder mit einem komplementären Schienenelement an der Unterseite des Sensorgehäuses 14 zusammen. Die Führungsschiene 26 ist dazu ausgebildet, das Sensorgehäuse 14 in Längsrichtung entlang der Längsachse des Sensorgehäuses 14 zu verschieben. Beim Verschieben des Sensorgehäuses 14 in distaler Längsrichtung gelangen die Gasanschlüsse 22, 24 in der distalen Endposition des Sensorgehäuses 14 in Eingriff.

Um ein Lösen des Eingriffs zwischen den Gasanschlüssen 22, 24 zu vermeiden, ist an dem Gasleckdetektor 20 eine Befestigungskralle 28 befestigt, die zwei Federschenkel 30 aufweist, die elastisch federnd gegeneinander verschwenkbar ausgebildet sind. Jeder Federschenkel 30 ist an dessen Innenseite mit einer Rastnase 32 versehen, die einen Abschnitt des zweiten stirnseitigen Endes 18 hintergreift und hält. Wenn das Sensorgehäuse 14 in distaler Richtung entlang der Führungsschiene 26 verschoben wird, gleitet zunächst das zweite stirnseitige Ende 18 des Sensorgehäuses 14 über schräg in Bezug auf die Längsachse angeordnete Gleitflächen 34 hinweg, wodurch die Federschenkel 30 entgegen der Kraftwirkung der Federkraft nach außen gebogen werden. Sobald das Sensorgehäuse 14 in seine distale Endlage gelangt, schnappen die Federschenkel 30 von der Federkraft angetrieben zurück in ihre Ausgangslage, in der die Rastnase 32 einen unteren Abschnitt 36 des zweiten stirnseitigen Endes 18 hintergreift und festhält.

Um die Verbindung zwischen der Befestigungskralle 28 und dem Sensorgehäuse 14 zu lösen, wird ein Spreizelement 38 auf das zweite stirnseitige Ende 18 des Sensorgehäuses 14 geschoben. Das Spreizelement 38 weist hierzu zwei Haltearme 40 auf, die an Ihrer Außenseite jeweils eine distale Einführschräge 42 und eine proximale Ausführschräge 44 aufweisen. Beim Vorschieben des Spreizelements 38 in distaler Richtung drückt jede Einführschräge 42 gegen die Rastnase 32 und presst den entsprechenden Federschenkel 30 nach außen, wodurch die Rastnase 32 außer Eingriff mit dem zweiten stirnseitigen Ende 18 des Sensorgehäuse 14 gelangt. Stattdessen umgreifen die beiden Haltearme 40 den unteren Abschnitt 36 des stirnseitigen Endes 18, wobei an der Innenseite jedes Haltearms 40 eine Zugflanke 46 ausgebildet ist, die an dem unteren Abschnitt 36 angreift und diesen hintergreift.

Das Spreizelement 38 ist mit einem Zuggriff 48 versehen, der in proximaler Richtung von dem Spreizelement 38 absteht und dazu ausgebildet ist, ergriffen und gehalten zu werden.

Zudem ist das Spreizelement 38 mit einem aufragenden T-Stück aus flexibler Mittelsäule 50 und oberem Querträger 52 versehen, an dessen äußeren Enden die Befestigungselemente 54 mit Schraublöchern zum Verschrauben an dem zweiten stirnseitigen Ende 18 des Sensorgehäuse 14 ausgebildet sind.

Wenn über den Zuggriff 48 ein Zug in proximaler Richtung auf das Spreizelement 38 ausgeübt wird, während die Zugflanken 46 das stirnseitige Ende 18 hintergreifen, gleitet jede der beiden Rastnasen 32 entlang der Ausführschräge 44 und wird von dieser nach außen gedrückt, wodurch der betreffende Federschenkel 30 zurückfedert und den Eingriff zwischen Spreizelement 38 und Befestigungskralle 28 löst.

Mithilfe der erfindungsgemäßen Kombination aus Führungsschiene, Befestigungskralle 28 und Spreizelement 38 ist es möglich, eine stabile, gegen versehentliches Lösen gesicherte und bei Bedarf einfach lösbare Verbindung zwischen einem Gassensor 12 und einem Gasleckdetektor 20 zu schaffen. Die Verbindung übt keine nennenswerten mechanischen Kräfte auf die beiden Gasanschlüsse 22, 24 und auf deren Eingriff aus, so dass eine Beeinträchtigung der Gasübertragung und der Signalübertragung zwischen Gassensor 12 und Gasleckdetektor 20 vermieden ist.

## Patentansprüche

1. Verbindungssvorrichtung zum Verbinden eines Gassensors (12) mit einem Gasleckdetektor (20), wobei der Gassensor (12) ein langgestrecktes Sensorgehäuse (14) mit zwei stirnseitigen Enden aufweist und der Gasleckdetektor (20) mindestens einen mit dem Gassensor (12) zu verbindenden ersten Gasanschluss (22) aufweist,
**gekennzeichnet durch**
eine mit dem Gasleckdetektor (20) verbundene Führungsschiene (26), die mit dem Sensorgehäuse (14) derart zusammengreift, dass der mindestens eine erste Gasanschluss in einer Endposition des Gassensors (12) mit mindestens einem komplementären zweiten Gasanschluss (24) des Gassensors (12) gasleitend zusammengreift,
einer Befestigungskralle (28), die zwei parallel zueinander verlaufende elastische Federschenkel (30) aufweist und die an dem einen von dem Sensorgehäuse (14) und dem Gasleckdetektor (20) angeordnet ist, wobei jeder der beiden Federschenkel (30) eine Rastnase (32) aufweist, die an dem zweiten Gasanschluss (24) gegenüberliegenden stirnseitigen Ende des Gassensors (12) angreift, um diesen in dessen distaler Endposition zu halten und ein Verschieben in proximaler Richtung zu verhindern, und einem Spreizelement (38) mit zwei zum Umgreifen des stirnseitigen Endes des Sensorgehäuses (14) ausgebildeten Haltearmen (40),
wobei jeder Haltearm (40) eine Zugflanke (46) zum Hintergreifen des stirnseitigen Endes aufweist, und wobei jeder Haltearm (40) eine Einführschräge (42) aufweist, entlang der beim Verschieben des Spreizelements (38) in distaler Richtung die Rastnase (32) eines Federschenkels (30) greift und den Federschenkel (30) entgegen der Federkraft verschwenkt und
wobei jeder Haltearm (40) eine Ausführschräge (44) aufweist, an der in der distalen Endposition des Sensorgehäuses (14), wenn die Zugflanken (46) mit dem stirnseitigen Ende des Sensorgehäuses (14) zusammengreifen, die Rastnasen (32) an den Ausführschrägen (44) angreifen und einen mechanischen Widerstand erhöhen, der zum Verschieben des Sensorgehäuses (14) und des Spreizelements (38) in proximaler Richtung entlang der Führungsschiene (26) zu überwinden ist.

2. Verbindungsvorrichtung nach Anspruch 1, **dadurch gekennzeichnet, dass** jeder der beiden Haltearme (40) an seiner Innenseite die Zugflanke (46) und an seiner gegenüberliegenden Außenseite die Einführschräge (42) und die Ausführschräge (44) aufweist,

3. Verbindungsvorrichtung nach Anspruch 1 oder 2, **dadurch gekennzeichnet, dass** das Spreizelement (38) zum Befestigen an dem stirnseitigen Ende des Sensorgehäuses (14) ausgebildet ist.

4. Verbindungsvorrichtung nach einem der vorhergehenden Ansprüche, **dadurch gekennzeichnet, dass** das Spreizelement (38) mit einem Zuggriff versehen ist, der dazu ausgebildet ist, das Spreizelement (38) fest zu ergreifen und in proximaler Richtung über den Widerstand durch den Zusammengriff von Ausführschräge (44) und Rastnase (32) zu bewegen.

5. Verbindungsvorrichtung nach einem der vorhergehenden Ansprüche, **dadurch gekennzeichnet, dass** das Spreizelement (38) und die Befestigungskralle (28) dazu ausgebildet sind, dass die Befestigungskralle (28) das Spreizelement (38) umgreift und hält, wenn die Befestigungskralle (28) das stirnseitige Ende des Sensorgehäuses (14) umgreift und hält.

6. Verbindungsvorrichtung nach einem der vorhergehenden Ansprüche, **dadurch gekennzeichnet, dass** die Führungsschiene (26) den ersten Gasanschluss (22) des Gasleckdetektors (20) trägt.

## Claims

1. A connecting device for connecting a gas sensor (12) to a gas leak detector (20), wherein the gas sensor (12) comprises an elongate sensor housing (14) having two opposite frontal ends and the gas leak detector (20) comprises at least one first gas connector (22) adapted to be connected to the gas sensor (12),
**characterized by**
a guide rail (26) connected to the gas leak detector (20), said guide rail engaging with the sensor housing (14) such that, in an end position of the gas sensor (12), the at least one first gas connector engages with at least one complementary second gas connector (24) of the gas sensor (12) in a gas-conducting manner,
a fastening claw (28) comprising two elastic spring legs (30) extending in parallel to each other and arranged at one of the sensor housing (14) and the gas leak detector (20), wherein each one of the two spring legs (30) comprises a latching boss (32) engaging the frontal end of the gas sensor (12) opposite the second gas connector (24) for retaining it in its distal end position and preventing a displacement in the proximal direction, and
a spreading element (38) having two retaining arms (40) configured for gripping around the frontal end of the sensor housing (14),
wherein each retaining arm (40) comprises a pulling edge (46) for gripping behind the frontal end, and wherein each retaining arm (40) comprises an inclined insertion portion (42) along which the latching boss (32) of a spring leg (30) grips and pivots the spring leg (30) against the spring force when the spreading element (38) is displaced in the distal direction, and
wherein each retaining arm (40) comprises an inclined disengagement portion (44) where in the distal end position of the sensor housing (14), when the pulling edges (46) engage with the frontal end of the sensor housing (14), the latching bosses (32) engage the inclined disengagement portions (44) and increase a mechanical resistance which is to be overcome for displacing the sensor housing (14) and the spreading element (38) in the proximal direction along the guide rail (26).

2. The connecting device according to claim 1, **characterized in that** each one of the two retaining arms (40) comprises the pulling edge (46) on its inside and the inclined insertion portion (42) and the inclined disengagement portion (44) on its opposite outside.

3. The connecting device according to claim 1 or 2, **characterized in that** the spreading element (38) is configured for fastening to the frontal end of the sensor housing (14).

4. The connecting device according any one of the preceding claims, **characterized in that** the spreading element (38) is provided with a pulling handle which is configured for fixedly gripping the spreading element (38) and to move it in the proximal direction against the resistance produced by the engagement of the inclined disengagement portion (44) with the latching boss (32).

5. The connecting device according to any one of the preceding claims, **characterized in that** the spreading element (38) and the fastening claw (28) are configured such that the fastening claw (28) grips around and retains the spreading element (38) when the fastening claw (28) grips around and retains the frontal end of the sensor housing (14).

6. The connecting device according to any one of the preceding claims, **characterized in that** the guide rail (26) supports the first gas connector (22) of the gas leak detector (20).

## Revendications

1. Dispositif de liaison permettant de relier un capteur de gaz (12) à un détecteur de fuites de gaz (20), le capteur de gaz (12) comprenant un boîtier de capteur (14) allongé comportant deux extrémités frontales et le détecteur de fuites de gaz (20) comprenant au moins un premier raccord de gaz (22) à relier au capteur de gaz (12),
**caractérisé par**
un rail de guidage (26) relié au détecteur de fuites de gaz (20) et venant en prise avec le boîtier de capteur (14) de telle manière que, dans une position d'extrémité du capteur de gaz (12), ledit au moins un premier raccord de gaz vient en prise avec au moins un deuxième raccord de gaz (24) complémentaire du capteur de gaz (12) de manière à acheminer du gaz,
une pince de fixation (28) qui comprend deux branches de ressort (30) élastiques s'étendant parallèlement l'une à l'autre et qui est agencée à l'un parmi le boîtier de capteur (14) et le détecteur de fuites de gaz (20), chacune des deux branches de ressort (30) comprenant un ergot d'encliquetage (32) venant en prise à l'extrémité frontale du capteur de gaz (12) opposée au deuxième raccord de gaz (24) afin de retenir ledit capteur dans sa position d'extrémité distale et d'empêcher son déplacement dans la direction proximale, et
un élément d'écartement (38) comprenant deux bras de retenue (40) conçus pour venir en prise autour de l'extrémité frontale du boîtier de capteur (14),
chaque bras de retenue (40) comprenant un flanc de traction (46) destiné à venir en prise derrière l'extrémité frontale, et chaque bras de retenue (40) comprenant un chanfrein d'insertion (42) le long duquel l'ergot d'encliquetage (32) d'une branche de ressort (30) vient en prise et fait pivoter la branche de ressort (30) à l'encontre de la force de ressort lorsque l'élément d'écartement (38) est déplacé dans la direction distale, et
chaque bras de retenue (40) comprenant un chanfrein de sortie (44) auquel, dans la position d'extrémité distale du boîtier de capteur (14), les ergots d'encliquetage (32) viennent en prise aux chanfreins de sortie (44) et augmentent une résistance mécanique à surmonter pour déplacer le boîtier de capteur (14) et l'élément d'écartement (38) dans la direction proximale le long du rail de guidage (26), lorsque les flancs de traction (46) viennent en prise avec l'extrémité frontale du boîtier de capteur (14).

2. Dispositif de liaison selon la revendication 1, **caractérisé en ce que** chacun des deux bras de retenue (40) comprend le flanc de traction (46) à son côté intérieur et le chanfrein d'insertion (42) et le chanfrein de sortie (44) à son côté extérieur opposé.

3. Dispositif de liaison selon la revendication 1 ou 2, **caractérisé en ce que** l'élément d'écartement (38) est conçu pour être fixé à l'extrémité frontale du boîtier de capteur (14).

4. Dispositif de liaison selon l'une quelconque des revendications précédentes, **caractérisé en ce que** l'élément d'écartement (38) est muni d'une poignée de traction conçue pour saisir fermement l'élément d'écartement (38) et le déplacer dans la direction proximale au-delà de la résistance fournie par la mise en prise du chanfrein de sortie (44) et de l'ergot d'encliquetage (32).

5. Dispositif de liaison selon l'une quelconque des revendications précédentes, **caractérisé en ce que** l'élément d'écartement (38) et la pince de fixation (28) sont conçus de sorte que la pince de fixation (28) vienne en prise autour de l'élément d'écartement (38) et le retienne lorsque la pince de fixation (28) vient en prise autour de l'extrémité frontale du boîtier de capteur (14) et la retient.

6. Dispositif de liaison selon l'une quelconque des revendications précédentes, **caractérisé en ce que** le rail de guidage (26) supporte le premier raccord de gaz (22) du détecteur de fuites de gaz (20).
